# EUROPEAN PATENT APPLICATION

(11) **EP 1 024 175 A1**
(43) Date of publication of application: **02.08.2000**
(21) Application number: 98944252.0
(22) Date of filing: 28.09.1998
(51) Int. Cl.: C08L 101/00, C08K 3/22, C08K 3/28, C08K 3/34, C08K 3/40, C08K 9/06

(54) **PLASTIC/CERAMIC COMPOSITE MATERIAL AND PROCESS FOR PRODUCING THE SAME**

(30) Priority: 30.09.1997 JP 26582297; 30.09.1997 JP 26582697
(71) Applicant: NGK INSULATORS, LTD., Nagoya-City, Aichi Prefecture 467-8530 (JP)
(72) Inventor: OTAGIRI, Tadashi, Nagoya-city Aichi-prefecture 457-0037 (JP); SUZUKI, Tomio, Yokkaichi-city Mie-prefecture 512-8027 (JP)
(74) Representative: Leson, Thomas Johannes Alois, Dipl.-Ing.
(86) International application number: JP9804322
(87) International publication number: WO9916831

(57) **Abstract**

A composite includes: a plastic matrix, and ceramic particles dispersed in the plastic matrix. The composite is preferably molded by an injection molding. The plastic matrix is preferably of thermoplastic resin, and a content of the ceramic particles is 60 vol% or more and 99 vol% or less. The composite can be easily molded into an arbitrary shapes at a low cost and has low coefficient of thermal expansion, high abrasion resistance and high elastic modulus.

## Description

### Technical Field

The present invention relates to a plastic-ceramic composite used as various kinds of machine parts, molded articles, and the like. More particularly, the present invention relates to a plastic-ceramic composite molded preferably by an injection molding and a method for producing the plastic-ceramic composite.

### Background Art

Plastic and ceramic are used for various machine parts, molded articles or the like, in a wide range of fields. Plastic can be easily molded to have a desired shape, and a cost for molding is low. However, plastic has a high coefficient of thermal expansion and is inferior in abrasion resistance and rigidity. On the other hand, ceramic has low coefficient of thermal expansion, high abrasion resistance, and high rigidity. However, molding a ceramic to give a desired shape requires a firing step, and a sintered ceramic is generally subjected to machining. Therefore, molding of ceramics is expensive and has more complicated steps in comparison with molding of plastic. Further, since it is difficult to mold an article having a complex shape, there is a low degree of flexibility in molding.

Therefore, a composite having merits of both plastic and ceramic has recently been developed by dispersing ceramic particles in a plastic matrix. There is desired a development of a composite having a characteristic of plastic (that plastic can be easily molded into a desired shape at a low cost by an injection molding, or the like) and a characteristic of ceramic (that ceramic has low coefficient of thermal expansion, high abrasion resistance, and high rigidity because of high elastic modulus). There is known, as such a composite, a material in which ceramic particles are dispersed in an epoxy resin, which is a thermosetting resin, so that the material has a content of ceramic particles of 80 - 90 vol%. Since the material has a low coefficient of thermal expansion and is excellent in moisture resistance, it is used for an IC package.

However, since a hardener is added to a thermosetting resin as a matrix during molding, there is a problem that the molding has low flexibility because the molding is restricted by time. Additionally, it has low productivity because molding pitch is slowed down by a requirement of maintaining a shape until hardening proceeds to a certain degree.

On the other hand, a composite containing a thermoplastic resin as plastic is known. However, since the composite has a low content of ceramic particles of 50 vol% or less, defects of plastic cannot be completely eliminated. For example, since the composite has a rather higher coefficient of thermal expansion in comparison with ceramic, precision in processing cannot be increased because of constriction, the composite lacks for rigidity and abrasion resistance of a molded article.

The present invention has been made in view of such a situation, and an object of the present invention is to provide a plastic-ceramic composite which can be easily molded to have a desired shape at a low cost and which has a low coefficient of thermal expansion, a high abrasion resistance, and high elasticity.

Another object of the present invention is to provide a composite having merits of ceramic body, little necessity of processing, and a high flexibility in molding and a method to produce the composite on the basis of an idea that an injection molding step is employed and a firing step is omitted.

### Disclosure of Invention

According to the present invention, there is provided a composite comprising:
a plastic matrix, and
ceramic particles dispersed in the plastic matrix,
wherein the plastic matrix is of thermoplastic resin, and a content of the ceramic particles is 60 vol% or more and 99 vol% or less.

According to the present invention, there is further provided a composite comprising:
a plastic matrix, and
ceramic particles dispersed in the plastic matrix,
and being molded by an injection molding,
wherein a content of the ceramic particles is 60 vol% or more and 99 vol% or less.

According to the present invention, there is furthermore provided a method for producing a composite, comprising the steps of:
mixing ceramic particles of 60 vol% or more and 99 vol% or less with plastic of 1 vol% or more and 40 vol% or less to obtain a mixture,
fluidizing the mixture at a temperature higher than a melting point of the plastic, and
subjecting the fluidized mixture to an injection molding to obtain the composite having a predetermined shape.

In the present invention, the ceramic particles preferably have aspect ratios of 2.0 or less. Preferably, the ceramic particles are subjected to silane coupling with the plastic matrix. The composite preferably has a coefficient of linear thermal expansion of 5 x 10⁻⁶K⁻¹. In a method of the present invention, the ceramic particles are preferably granulated to obtain ceramic secondary particles having aspect ratios of 2.0 or less.

### Best Mode for Carrying Out the Invention

A composite of the present invention is produced by dispersing ceramic particles in a plastic matrix. A thermoplastic resin is preferably used as the plastic. A content of the ceramic particles is 60 vol% or more and 99 vol% or less.

In a composite of the present invention, a thermoplastic resin is preferably used as the plastic. The composite can be easily produced by injection molding at a low cost. That is, since it does not need firing and machining after firing, improvement in productivity can be expected. Further, it can be molded into complex shapes which are not possible to make through machining. Incidentally, a thermosetting resin can be used instead of the thermoplastic resin as the plastic. However, since a thermosetting resin is less suitable for an injection molding than a thermoplastic resin because a thermosetting resin has a problem of setting conditions for hardening or the like, a thermoplastic resin is preferably used.

As a thermoplastic resin, there can be used a resin such as hard vinyl chloride, polyethylene, polypropylene, polyethylene terephthalate, polyacrylate, polystyrene, ABS resin, polyacetal, nylon 6, nylon 66, poly(ethylene tetrafluoride), polycarbonate, poly(vinylidene fluoride), polyetherimide, reinforced poly(ethylene terephthalate), poly(phenylene sulfide), poly amide-imide, poly(ether-ether-ketone), polyimide and various kinds of liquid crystal plastics. More than one of the resins from the above may be used in combination. Among the aforementioned thermoplastic resins, there is preferably used for a plastic-ceramic composite of the present invention a resin having high thermal resistance, i.e., a resin having a heat distortion temperature of 100°C or more (HDT in a condition of 4.6kg/cm²), such as polyacrylate, polystyrene, ABS resin, polyacetal, nylon 6, nylon 66, poly(ethylene tetrafluoride), polycarbonate, poly(vinylidene fluoride), poly(ether-imide), reinforced poly(ethylene terephtalate), poly(phenylene sulfide), poly amide-imide, poly(ether-ether-ketone) or polyimide. There is more preferably used a resin having a heat distortion temperature of 150°C or more, such as nylon 6, nylon 66, poly(vinylidene fluoride), polyetherimide, reinforced poly(ethylene terephthalate), poly(phenylene sulfide), poly amide-imide, poly(ether-ether-ketone) or polyimide.

On the other hand, as a thermosetting resin, there may be used phenol resin, epoxy resin, unsaturated polyester, urea resin, melamine resin or the like. Two or more of the aforementioned thermosetting resins may be used in combination.

In the present invention, the content of the ceramic particles is 60 vol% or more, thereby effectively imparting ceramic characteristics such as low coefficient of thermal expansion, high abrasion resistance and high elasticity to the resulting composite. Additionally, shrinkage upon molding can be reduced, and precision in processing can be increased. Incidentally, the content of the ceramic particles is preferably 70 vol% or more, and more preferably 80 vol% or more. On the other hand, the content of the ceramic particle is 99 vol% because molding is impossible when the content of ceramic particles exceeds 99 vol% because the content of plastic is too small to maintain flowability of a composite.

As a ceramic, there can be suitably used, silica glass, cordierite, β-spodumene, mullite, alumina, zirconia, silicon nitride, aluminum nitride, silicon carbide or the like. More than one of the ceramics from the above may be used in combination.

Among the aforementioned plastics, silica glass cordierite and β-spodumene are particularly preferable for the purpose of low coefficient of thermal expansion, and mullite, alumina, zirconia, silicon nitride, aluminum nitride and silicon carbide are particularly preferable for the purpose of high elasticity or the like.

A plastic-ceramic composite of the present invention preferably has a coefficient of linear thermal expansion of 5 x 10⁻⁶K⁻¹ or less. Since ceramic generally has a coefficient of linear thermal expansion of about 1 - 10 x 10⁻⁶K⁻¹, a composite having a coefficient of linear thermal expansion to such a degree can be used instead of ceramic, and shrinkage upon molding can be further reduced. To impart the to a plastic-ceramic composite coefficient of linear thermal expansion of 5 x 10⁻⁶K⁻¹ or less, a plastic to be used preferably has a coefficient of linear thermal expansion of 5 x 10⁻⁶K⁻¹ or less.

The plastic to be used for a composite of the present invention preferably has a glass transition point of 70°C or more, and more preferably 100°C or more. This is because coefficient of thermal expansion of plastic suddenly increases when it exceeds a glass transition point, and a size of the composite containing plastic having a grass transition point of under 70°C may be changed when the composite is used at the normal temperature. Plastics having a glass transition point of 70°C or higher are, for example, polycarbonate, poly(phenylene sulfide), polyacrylate, poly(ether-ether-ketone), poly amide-imide and the like.

In a composite of the present invention, each of ceramic particles preferably has an aspect ratio of 2.0 or less.

By controlling the aspect ratio within the aforementioned range, ceramic particles can be dispersed beyond the closest packing in a plastic matrix, thereby decreasing the coefficient of thermal expansion of the composite. That is, when the aspect ratio of a ceramic particle exceeds 2.0, it is difficult to increase the content of ceramic particles.

The ceramic particles preferably have an average particle diameter of 0.1 - 20 µm. This is because, when the average particle diameter is lower than 0.1 µm or exceeds 50 µm, flowability upon molding is lost, and improvement in productivity becomes unobtainable.

In a composite of the present invention, ceramic particles are preferably connected with a plastic matrix by a silane coupling.

Silane coupling enables the use of a ceramic having low compatibility and enhances elasticity of the composite.

Next, a method for producing a composite of the invention is described in the case of mainly a composite obtained by injection molding.

First, 60 vol% or more and 99 vol% or less of ceramic particles are mixed with 1 vol% or more and 40 vol% or less of plastic particles to obtain a mixture. The mixture is fluidized by raising a temperature of the mixture up to a melting point or higher of the plastic. Then, the fluidized mixture is filled in a mold for injection molding to obtain a predetermined shape of a composite having a high ceramic content.

The method is hereinbelow described in more detail.

### (Preparation of ceramic particles)

A plurality of powders having a predetermined aspect ratio and an average particle diameter are mixed together so as to prepare ceramic particles having a desired average particle diameter and aspect ratio. Regarding distribution of particle size of the ceramic particles, it is preferable that at least 90% of the ceramic particles have particle diameters of 1 - 100 µm. The distribution of particle size is adjusted by mixing powders each having a predetermined distribution of particle size in the aforementioned manner.

When the aspect ratio of a powder is too high, secondary particles obtained by granulation can be used by controlling an aspect ratio of the secondary particles to be 2.0 or less. Granulation can be conducted by a spray dryer, or the like. An aspect ratio of the secondary particles is preferably 2.0 or less. This is because the ceramic particles can be treated in the same manner as the primary particles with regard to the amount used when mixing the ceramic particles with the plastic and the method used if the secondary particles have the aforementioned aspect ratio.

Then, as necessary, ceramic particles are subjected to silane coupling. The silane coupling is conducted by a known method such as an integral blending and a pretreatment by a spray or the like.

### (Mixing of ceramic particles and plastic particles)

First, ceramic particles are mixed with plastic particles. The plastic particles are molten at a temperature a little higher (for example, 10 - 50°C higher) than the melting point of the plastic particles to obtain a plastic matrix, and the ceramic particles are then dispersed in the plastic matrix. In the case that a content of ceramic particles in a composite is increased, a melting point is preferably raised in view of securing flowability. The aforementioned mixing and dispersion treatments are conducted by the use of a kneader, a trirolling mill and the like. Then, the kneaded mixture is pelletized.

The plastic components in the pellet are molten at a temperature a little higher than the melting point of the plastic components, and the mixture is subjected to molding by a known molding method such as extrusion molding, injection molding or the like. In consideration of productivity and reduction of production costs, injection molding is preferable.

As conditions for injection molding, a temperature of a cylinder, a pressure for injection, and a temperature of a mold are generally determined on the basis of recommended conditions for plastic to be used by a supplier or properties of the plastic. For example, in the case of high density polyethylene, a temperature of a cylinder, a pressure for injection and a temperature of a mold are 190 - 200°C, 300 - 1000 kg/cm², 50 - 60°C, respectively, and in the case of polyamide, a temperature of a cylinder, a pressure for injection and a temperature of a mold are 240 - 250°C, 500 - 1000 kg/cm², 50 - 70°C, respectively.

When a raw material to be injected has a high content of ceramic as in the present invention, flowability of the raw material sometimes increases when a temperature of a cylinder is about 10 - 15°C higher in comparison with the case of a single substance of plastic though it depends on a kind (kinds) of plastic and/or ceramic. A pressure for injection is sometimes set to be about 10 - 50% higher in comparison with the case of a single substance.

A composite of the present invention can be produced by an injection molding, which has high degree of flexibility in molding, and has high rigidity and abrasion resistance like a ceramic. Further, a composite of the present invention has a high dimensional precision when it is used because it has a low coefficient of thermal expansion. Therefore, a composite of the present invention can be suitable used for parts which have conventionally been made of plastic and did not have sufficient abrasion resistance or which have conventionally been made of ceramic and were expensive, for example, optical connectors, electrostatic chucks for etching, precision molded articles and the like, of which a low thermal expansion is required, various machine parts such as gears, of which high elasticity is required, or the like.

Then, a present invention is described in more detail with reference to Examples. However, the present invention is by no means limited to these Examples.

### ( Example 1 )

There were used polycarbonate as a plastic material and silica glass as a ceramic material, resulting in a plastic-ceramic composite having a content of ceramic particles of 94 vol%. The ceramic particles had an average particle diameter of 25 µm, a particle size distribution of 1 - 100 µm and an aspect ratio of 1.10.

First, the ceramic particles were subjected to silane coupling by a spray method. Then, the ceramic particles were mixed with plastic particles at 320°C by a kneader to obtain a mixture. The mixture was then pelletized. The pellet was subjected to injection molding at a temperature of the cylinder of 310°C and a temperature of the die of 90°C under a pressure for injection of 1500 kg/cm² to obtain a laminar composite of 50 mm x 5 mm. Table 1 shows the coefficient of thermal expansion of the obtained composite.

### ( Example 2 )

There were used polyacrylate as a plastic material and cordierite as a ceramic material, resulting in a plastic-ceramic composite having a content of ceramic particles of 91 vol%. A plastic-ceramic composite was produced in the same manner as in Example 1 except that the ceramic particles were mixed with plastic particles at 260°C, a temperature of the cylinder was 260°C, a pressure for injection was 1000 kg/cm², a temperature of the mold was 70°C and the ceramic particles had an average particle diameter of 20 µm, a particle size distribution of 5 - 80 µm and an aspect ratio of 1.15. Table 1 shows the coefficient of thermal expansion of the obtained composite.

### ( Example 3 )

There were used polycarbonate as a plastic material and silica glass as a ceramic material, resulting in a plastic-ceramic composite having a content of ceramic particles of 70 vol%. A plastic-ceramic composite was produced in the same manner as in Example 1 except that the ceramic particles were mixed with plastic particles at 330°C and the ceramic particles had an average particle diameter of 25 µm, a particle size distribution of 5 - 90 µm and an aspect ratio of 2.50. Table 1 shows the coefficient of thermal expansion of the obtained composite.

### ( Example 4 )

There were used polycarbonate as a plastic material and silica glass as a ceramic material, resulting in a plastic-ceramic composite having a content of ceramic particles of 65 vol%. A plastic-ceramic composite was produced in the same manner as in Example 1 except that silane coupling was not conducted, the ceramic particles were mixed with plastic particles at 340°C, a temperature of the cylinder was 320°C. The ceramic particles had the same average particle diameter, particle size distribution and aspect ratio. Table 1 shows the coefficient of thermal expansion of the obtained composite.

### ( Comparative Example 1 )

The same composite as in Example 1 was produced in the same manner as in Example 1 except that the content of ceramic particles was 50 vol%, the ceramic particles were mixed with plastic particles at 300°C and a temperature of the cylinder was 290°C. Table 1 shows the coefficient of thermal expansion of the obtained composite.

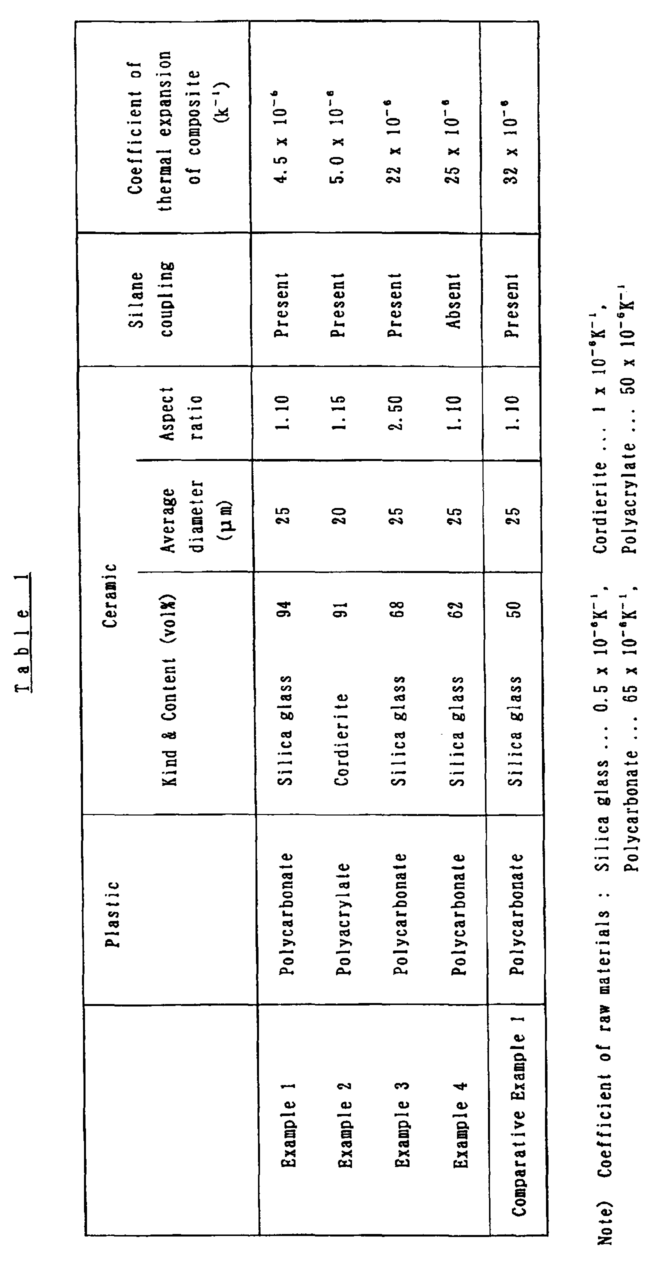

It is known from comparison of Example 1 with Comparative Example 1 that a composite of Example 1, which has a content of ceramic particles within the range of 60 - 99 vol%, has remarkably lower coefficient of thermal expansion in comparison with a composite of Comparative Example 1, which has a content of ceramic particles of lower than 60 vol%.

Ceramic particles had an aspect ratio over 2.0 in Example 3, and silane coupling was not conducted in Example 4. This impeded to increase the contents of ceramic particles in Examples 3 and 4 up to above 68 vol% and above 62 vol%, respectively. As a result, the composites of Examples 3 and 4 showed higher coefficients of thermal expansion than the composite of Example 1. That is, a content of ceramic particles can be increased by controlling an aspect ratio of ceramic particles to be a predetermined value and subjecting the ceramic particles to silane coupling, thereby decreasing a coefficient of thermal expansion of the composite.

### ( Example 5 )

There were used polysulfone as a plastic material and silica glass as a ceramic material, resulting in a plastic-ceramic composite having a content of ceramic particles of 60 vol%. A plastic-ceramic composite was produced in the same manner as in Example 1 except that the ceramic particles were mixed with plastic particles at 400°C, a temperature of the cylinder was 410°C, a pressure for injection was 1200 kg/cm², a temperature of the die was 110°C and the ceramic particles had an average particle diameter of 30 µm and an aspect ratio of 1.05. Table 2 shows the tensile elastic modulus of the obtained composite.

### ( Example 6 )

There were used polysulfone as a plastic material and alumina as a ceramic material, resulting in a plastic-ceramic composite having a content of ceramic particles of 80 vol%. A plastic-ceramic composite was produced in the same manner as in Example 5 except that the ceramic particles had an average particle diameter of 35 µm and an aspect ratio of 1.15. Table 2 shows the tensile elastic modulus of the obtained composite.

### ( Example 7 )

There were used high density polyethylene as a plastic material and zirconia as a ceramic material, resulting in a plastic-ceramic composite having a content of ceramic particles of 90 vol%. A plastic-ceramic composite was produced in the same manner as in Example 1 except that the ceramic particles were mixed with plastic particles at 240°C, a temperature of the cylinder was 220°C, a pressure for injection was 1100 kg/cm², a temperature of the die was 60°C and the ceramic particles had an average particle diameter of 20 µm and an aspect ratio of 1.25. Table 2 shows the tensile elastic modulus of the obtained composite.

### ( Comparative Example 2 )

There were used polysulfone as a plastic material and silica glass as a ceramic material, resulting in a plastic-ceramic composite having a content of ceramic particles of 50 vol%. A plastic-ceramic composite was produced in the same manner as in Example 1 except that the ceramic particles had an average particle diameter of 30 µm and an aspect ratio of 1.05. Table 2 shows the tensile elastic modulus of the obtained composite.

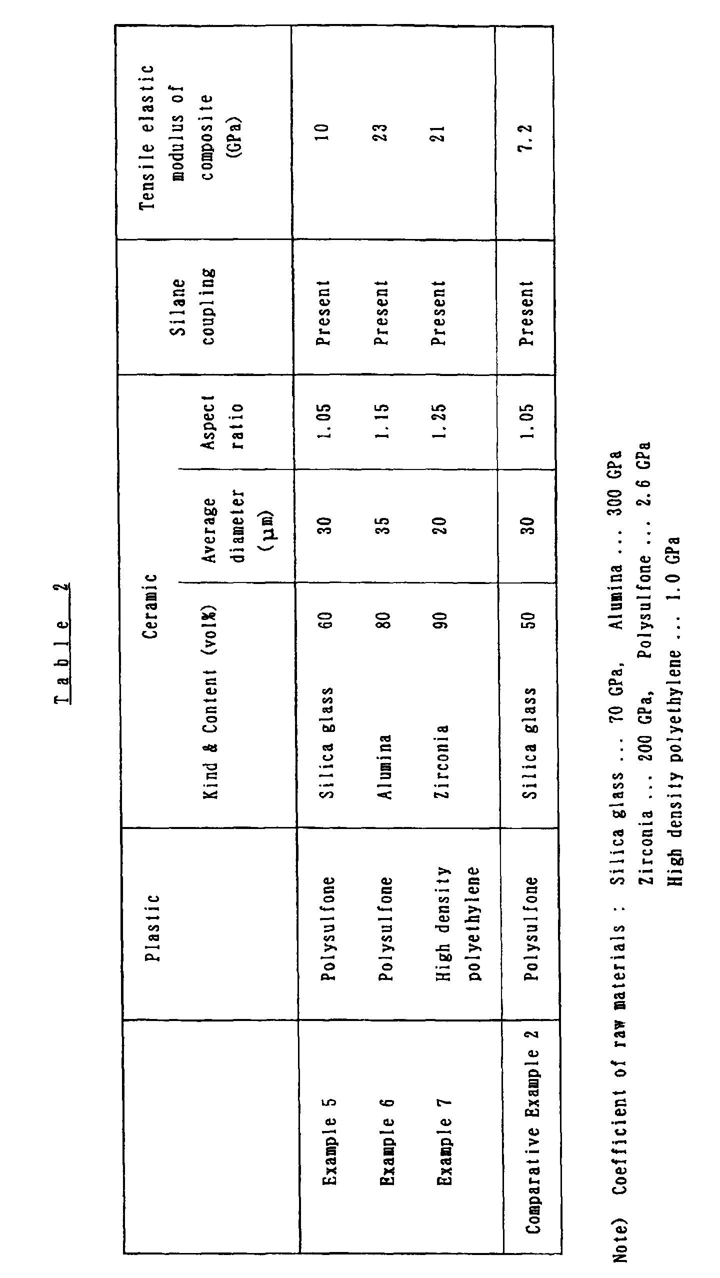

It is known from comparison of Examples 5 - 7 with Comparative Example 2 that each of composites of Examples 5 - 7, which has a content of ceramic particles within the range of 60 - 99 vol%, has remarkably higher tensile elastic modulus in comparison with a composite of Comparative Example 2, which has a content of ceramic particles of lower than 60 vol%.

Additionally, it is known from comparison among Examples 5 - 7 that tensile elastic modulus is high when alumina or zirconia is used as a ceramic material.

### Industrial Applicability

A composite of the present invention can be easily produced at a low cost by injection molding, and therefore, improvement in productivity can be expected. Further, it can be easily molded into complex shapes which are not possible to make through machining. Since the content of ceramic particles is 60 vol% or more, the composite remarkably possesses properties of ceramics such as low coefficient of thermal expansion, high abrasion resistance and high elastic modulus. Additionally, shrinkage upon molding can be reduced, and therefore, a precision in processing can be increased. Therefore, a composite of the present invention can be used for parts which have conventionally been made of ceramic, for example, optical connectors, electrostatic chucks for etching, precision molded articles and the like, of which a low thermal expansion is required, various machine parts such as gears, of which high elasticity is required, or the like.

## Claims

1. A composite comprising:
a plastic matrix, and
ceramic particles dispersed in the plastic matrix,
wherein the plastic matrix is of thermoplastic resin, and a content of the ceramic particles is 60 vol% or more and 99 vol% or less.

2. A composite comprising:
a plastic matrix, and
ceramic particles dispersed in the plastic matrix,
and being molded by an injection molding,
wherein a content of the ceramic particles is 60 vol% or more and 99 vol% or less.

3. A composite according to claim 1 or 2, wherein the ceramic particles have aspect ratios of 2.0 or less.

4. A composite according to any one of claims 1 - 3, wherein the ceramic particles are subjected to silane coupling with the plastic matrix.

5. A composite according to any one of claims 1 - 4, wherein the composite has a coefficient of linear thermal expansion of 5 x 10⁻⁶K⁻¹.

6. A composite according to claim 2, wherein the plastic matrix is thermoplastic.

7. A method for producing a composite, comprising the steps of:
mixing ceramic particles of 60 vol% or more and 99 vol% or less with plastic of 1 vol% or more and 40 vol% or less to obtain a mixture,
fluidizing the mixture at a temperature higher than a melting point of the plastic, and
subjecting the fluidized mixture to an injection molding to obtain the composite having a predetermined shape.

8. A method for producing a composite according to claim 7, wherein the ceramic particles have an average particle diameter of 0.1 - 50 µm and aspect ratios of 2.0 or less.

9. A method for producing a composite according to claim 7 or 8, wherein the plastic is thermoplastic.

10. A method for producing a composite according to any one of claims 7 - 9, wherein the ceramic particles are granulated to obtain ceramic secondary particles having aspect ratios of 2.0 or less.

11. A method for producing a composite according to any one of claims 7 - 10, wherein the ceramic particles are subjected to silane coupling with the plastic matrix.
